# EUROPEAN PATENT SPECIFICATION

(11) **EP 2 120 465 B1**
(45) Date of publication and mention of the grant of the patent: **23.04.2014**
(21) Application number: 08757722.7
(22) Date of filing: 13.06.2008
(51) Int. Cl.: H04L 29/06, H04L 29/12

(54) **METHOD, ENTITY AND SYSTEM OF REALIZING NETWORK ADDRESS TRANSFER**
VERFAHREN, EINHEIT UND SYSTEM ZUR IMPLEMENTIERUNG VON NETZWERK-ADRESSENÜBERTRAGUNG
PROCÉDÉ, ENTITÉ ET SYSTÈME POUR EFFECTUER UN TRANSFERT D'ADRESSE DE RÉSEAU

(30) Priority: 15.06.2007 CN 200710118990; 20.07.2007 CN 200710130171
(43) Date of publication of application: 18.11.2009
(73) Proprietor: Huawei Technologies Co., Ltd., Longgang District, Shenzhen Guangdong 518129 (CN)
(72) Inventor: ZOU, Ting, Longgang District 518129, Shenzhen (CN); ZHENG, Zhenjian, Longgang District 518129, Shenzhen (CN)
(74) Representative: Kreuz, Georg Maria
(86) International application number: PCT/CN2008/071311
(87) International publication number: WO 2008/154850

(56) References cited:
- EP-A1- 1 489 809
- WO-A1-2007/024169
- CN-A- 1 604 589
- CN-A- 1 734 994
- US-A1- 2006 013 192
- ELECTRONIC COMMUNICATIONS COMMITTEE (ECC): "Technical Issues of establishing any-to-any 2-way real-time communications over the internet" INTERNET CITATION July 2004 (2004-07), pages 1-19, XP002420449 Retrieved from the Internet: URL:http://web.archive.org/web/20050424081 036/http://www.ero.dk/documenta tion/docs/doc98/offical/Word/ECCREP050.doc > [retrieved on 2007-02-16]
- 'Technical Specification Group Core Network and Terminals; Policy control over Gq interface' 3GPP TS 29.209 V6.3.0 June 2005, XP008117139
- DEASON N.: 'SDP Usage for SOAP Sessions' DRAFT-DEASON-MMUSIC-SDP-SOAP-00 24 August 2003, XP015000690
- YON D.: 'Connection-Oriented Media Transport in SDP' DRAFT-IETF-MMUSIC-SDP-COMEDIA-02.TXT October 2002, XP008117138
- "Telecommunications and Internet converged Services and Protocols for Advanced Networking (TISPAN); NGN Functional Architecture Release 1; ETSI ES 282 001", IEEE, LIS, SOPHIA ANTIPOLIS CEDEX, FRANCE, vol. TISPAN, no. V1.1.1, 1 August 2005 (2005-08-01), XP014031749, ISSN: 0000-0001

## Description

### Field of the Technology

The present invention relates to communication technology, and more particularly to a method, an entity, and a system for realizing network address translation (NAT).

### Background of the Invention

As Internet has been widely applied, various types of network services emerge one after another, and advanced multimedia communication systems are continuously proposed. As real-time services are sensitive to characteristics like the network transmission delay and delay variation, if File Transfer Protocol (FTP) services or Hypertext Transfer Protocol (HTTP) services with image files that have high burst characteristics exist in the network, the real-time services may be seriously affected. Furthermore, since the multimedia services occupy a large bandwidth, critical services that need to be guaranteed in the existing network may be difficult to be transmitted reliably. Therefore, various quality of service (QoS) techniques are proposed to solve the above problems.

Ethernet and end to end Ethernet techniques enjoy high cognition among operators and users in enterprises and public institutions. The Ethernet technique is one of the main techniques for constructing triple play and Metropolitan Area Network (MAN) in the future, and Ethernet services may be developed dramatically in the future market.

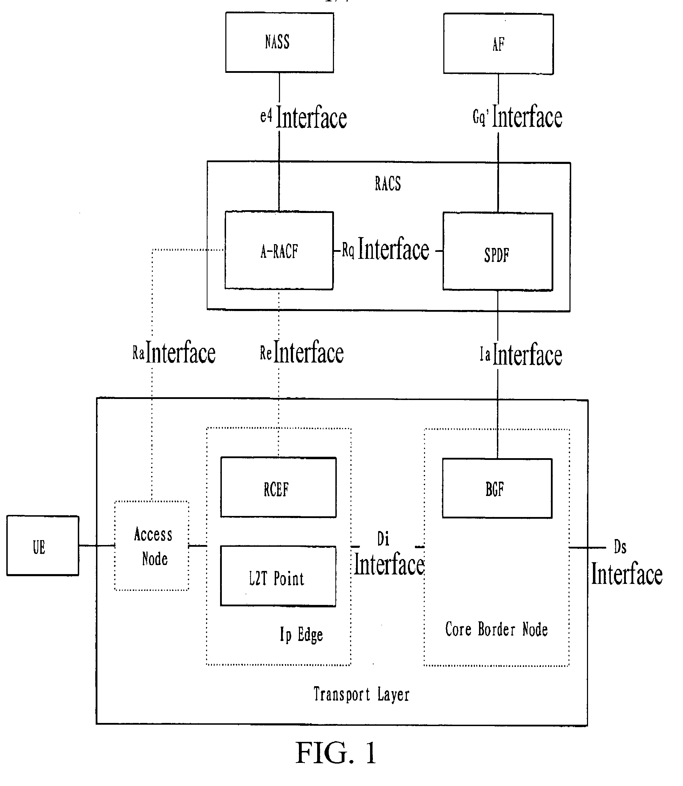

In view of the above, in a next generation network (NGN) (a packet network architecture of ETSI TISPAN), a resource admission control subsystem (RACS) is introduced between an application layer and a transport layer and is responsible for uniform management of bearer network resources, and providing policy-based control, including QoS and network address translation (NAT) of the bearer network that all need to be accessed and controlled via the RACS. The RACS architecture defined in the NGN is shown in FIG. 1.

The RACS mainly includes a service-based policy decision function (SPDF) entity and an access-resource admission control function (A-RACF). The other parts of FIG. 1 demonstrate relations and interfaces between relevant functional entities and the RACS architecture. An application function (AF) entity interacts with the SPDF entity via a Gq' interface, and transmits information about session services. The AF entity may be specifically a proxy-call session control function (P-CSCF) or an interconnect border control function (IBCF). A border gateway function (BGF) and a resource control enforcement function (RCEF) are policy enforcement points (PEPs) on the transport layer. The SPDF entity mainly interacts with the BGF, so as to instruct the BGF to implement QoS control policy and/or NAT control.

The NAT solves the problem about address conflict by substituting an unregistered address written in an IP packet with a legal and registered IP address. That is, internal addresses are used in an internal network, and the NAT translates the internal addresses into legal IP addresses for being used in the Internet. During the NAT, the addresses in the IP packet are substituted by legal IP addresses, so as to enable plenty of internal hosts to access the Internet via a few IP addresses.

However, the following disadvantages have become apparent.

According to the current RACS standard, when one traffic flow contains an uplink media stream and a downlink media stream, and in the case of interworking between an IP multimedia subsystem (IMS) network and certain conventional networks such as a public switched telephone network (PSTN), the SPDF entity cannot distinguish a direction of a current session description protocol (SDP), and thus cannot perform an NAT control.

Electronic Communication Committee (ECC): "Technical issues of establishing any-to-any 2-way real-time communications over the internet", INTERNET CITATION July 2004 describes a tutorial on the problems of establishing any-to-any 2-way real-time communications over the Internet. Such communications include separate signaling and media streams and frequently encounter problems where users are on a private network such as a LAN that is connected to the Internet via a firewall and/ or a Network Address Translator. NATs work on the basis of communication sessions, which are identified uniquely by the combination of the sending IP address and port number and the destination IP address and port number. Firewalls track and control communications, deciding whether to allow, reject or encrypt communications.

US 2006/0013192 A1 discloses a UE (User Equipment) (IP1) **10** establishes a communication via SIP (Session Initiation Protocol) with a CN (Correspondent Node) (IP3) **30.** The UE is protected by a firewall **50,** and a client-server PEP (Performance Enhancement Proxy) (IP2) **20** is used in order to optimize the performance of the data communication. To enable an efficient usage of the PEP 20, an extra field, "f", is introduced in the Session Description Protocol (SDP). As a result, the UE specifies PEP information in the "f" field or "f" fields, the "f" fields comprise a direction filed which indicates the direction of the media flow, and are used to create the appropriate pinholes in the firewall.

### SUMMARY OF THE INVENTION

Accordingly, the present invention is directed to a method, an entity, and a system for realizing network address translation (NAT), so as to solve the problem in the prior art that a service-based policy decision function (SPDF) entity cannot distinguish a direction of a current session description protocol (SDP) and thus cannot perform an NAT control.

The invention is defined in the claims.

As seen from the technical solutions provided by the present invention, by extending messages interacted between the AF entity and the SPDF entity and adding a field indicating a signaling direction, the SPDF entity is enabled to distinguish an uplink direction or a downlink direction of the message, in which the uplink direction is, for example, from an access side to a core side or from a local core side to an opposite core side, or the downlink direction is, for example, from the core side to the access side or from the opposite core side to the local core side, so as to realize an NAT control.

### BRIEF DESCRIPTION OF THE DRAWINGS

FIG. 1 is an architectural diagram of an RACS defined in an NGN according to the prior art;
FIG. 2 is a schematic diagram of an SDP Direction AVP message in the case of IBCF networking according to an embodiment of the present invention;
FIG. 3 is a flow chart of a first embodiment of the present invention;
FIG. 4 is a flow chart of a second embodiment of the present invention;
FIG. 5 is a flow chart of realizing an NAT control at a calling party in the case of IBCF networking according to an embodiment of the present invention;
FIG. 6 is a flow chart of realizing an NAT control at a called party in the case of IBCF networking according to an embodiment of the present invention; and
FIG. 7 is a schematic diagram of a system according to a third embodiment of the present invention.

### DETAILED DESCRIPTION OF THE EMBODIMENTS

The technical solutions of the present invention are clearly and completely described as follows with reference to the accompanying drawings. Apparently, the embodiments to be described are only a part rather than all of the embodiments of the present invention. In the embodiments of the present invention, by extending an interface between two entities and adding a field indicating a signaling direction in a message of the interface, in which the field indicating the signaling direction carries the signaling direction information, a message receiver is enabled to rapidly and explicitly identify the signaling direction according to the signaling direction information carried in the field indicating the signaling direction, so as to realize an NAT control and other operations.

The two entities may be an AF entity and an SPDF entity.

In the following embodiments, two entities, AF entity and SPDF entity, in the IMS are taken as an example for illustration, in which a Session Initiation Protocol (SIP) is, for example, adopted between the two entities. By extending an interface Gq' between the AF entity and the SPDF entity and adding a field indicating an SDP direction, that is, an SDP Direction attribute-value pair (AVP), in an AAR message at the Gq', the SPDF entity is enabled to distinguish an uplink direction or a downlink direction of the SDP, so as to realize an NAT control.

In an embodiment of the present invention, SDP Direction AVP indicating the SDP direction is added at the interface Gq' between the AF entity and the SPDF entity, and the AAR message is defined as follows:

```
   <AA-Request> ::= < Diameter Header: 265, REQ, PXY >
                        < Session-Id > (Session ID)
                        { Autb-Application-Id } (Application ID)
                        { Origin-Host } (Origin host)
                        { Origin-Realm} (Origin realm)
                        { Destination-Realm } (Destination realm)
                        [SDP Direction] (SDP direction)
                       *[ Media-Component-Description ] (Media component
                       description)
                        *[ Flow-Grouping ] (Flow grouping)
                        [ AF-Charging-Identifier ] (AF charging identifier)
                        [ SIP-Forking-Indication ] (SIP forking indication)
                      *[ Specific-Action ] (Specific action)
                        [ User-Name ] (User name)
                        [ Binding-Information ] (Binding information)
                        [ Latching-Indication ] (Latching indication)
                        [ Reservation-Priority ] (Reservation priority)
                        [ Globally-Unique-Address ] (Globally unique address)
                        [ Authorization-Lifetime ] (Authorization lifetime)
                      *[ Proxy-Info ] (Proxy information)
                      *[ Route-Record ] (Route record)
                      *[ AVP ] (Other AVPs)
```

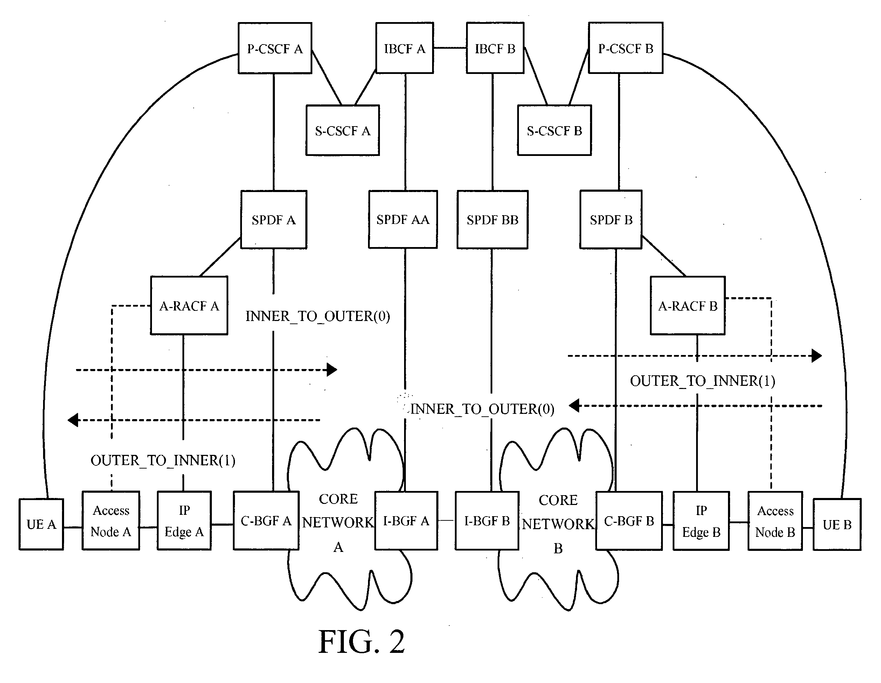

In the above defined AAR message, [SDP Direction] is corresponding to the SDP Direction AVP, and a format of the SDP Direction AVP may be a 32-bit integer. Referring to FIG. 2, when the SDP Direction AVP is configured for an NAT control in the case of IBCF networking, the SDP Direction AVP may be defined as follows:
INNER_TO_OUTER(0): indicating a direction from an access side to a core side or from a local core side to an opposite core side.
OUTER_TO_INNER(1): indicating a direction from the core side to the access side or from the opposite core side to the local core side.

The SDP Direction AVP is applicable to an NAT control and/or QoS resource reservation scenario.

The applications of the SDP Direction AVP are illustrated in detail as follows through different embodiments.

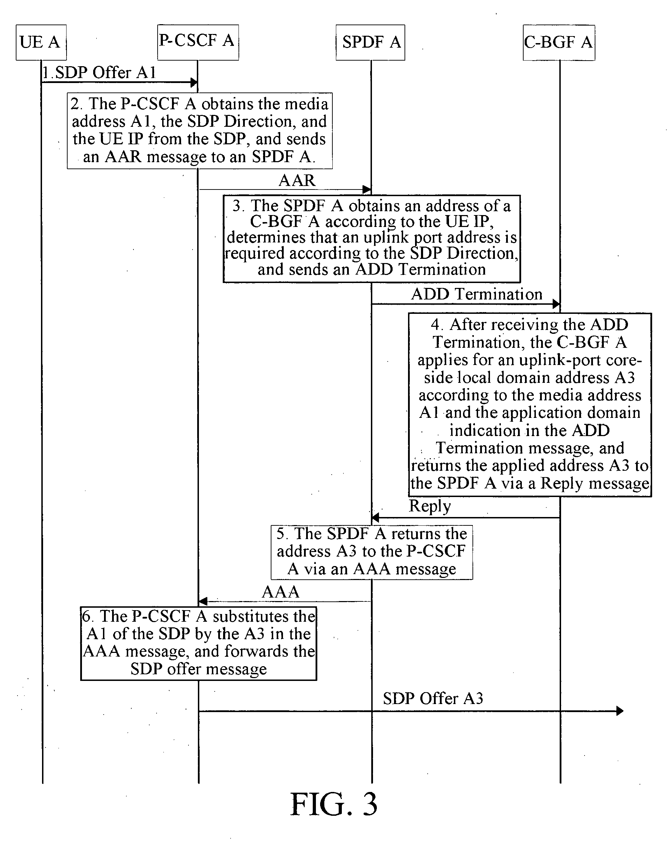

In a first embodiment, the present invention provides a method for realizing an NAT control by using an SDP direction. Referring to FIG. 3, a method for realizing an NAT control by a calling party is shown, in which an IBCF networking scenario does not exist, the AF entity is specifically a P-CSCF, and the calling party is set to be a user entity A, that is, UE A. The method mainly includes the following steps.

In Step 1, a P-CSCF A receives an SDP offer message (offering an SDP message configuration) sent from the UE A.

The SDP offer message may be carried in a message such as an INVITE request, and include a group of media streams and codes expected to be used by a message sender (the UE A at an access end), an IP address and a port number through which a message expected to be received by the message sender, and an IP address of the access end. Particularly, the SDP offer message may include an IP address and a port number through which a message (for example, a media stream) expected to be received. For example, the message may carry a media address A1, an SDP Direction (INNER_TO_OUTER(0): entering an IMS core domain), and an IP address of the UE A, in which "entering the IMS core domain" indicates a direction from the access side to the core side.

Regarding a message sent from the UE A to a core-network side, the media address serves as a destination address of the message for the UE A side, and serves as a source address of the message for the core-network side.

In Step 2, the P-CSCF A obtains the media address A1, the SDP Direction (INNER_TO_OUTER(0): entering the IMS core domain), and the IP address of the UE A from the received SDP offer message, and then sends an AAR message to an SPDF A.

The content carried by the AAR message may be obtained with reference to the above definition of the AAR message.

In Step 3, after receiving the AAR message, the SPDF A searches for a local route according to the IP address of the UE A, obtains an address of a C-BGF A (a core-BGF corresponding to the UE A side) corresponding to the IP address of the UE A, and obtains a value of the SDP Direction carried in the AAR message, in which the value is INNER_TO_OUTER(0), so that the SPDF A determines that it requires to apply for an uplink port address of a media stream (that is, a core-side address). Therefore, the SPDF A sends an ADD Termination (a local domain address request) message to the C-BGF A, and applies for an allocation of an uplink port address of a media stream.

The ADD Termination message carries the media address A1 of the SDP offer message and an application domain indication (indicating that it applies for an access-side local domain address or a core-side local domain address).

In Step 4, after receiving the ADD Termination message, the C-BGF A applies for an uplink-port core-side local domain address A3 according to the media address A1 and the application domain indication in the ADD Termination message, and returns the applied address A3 to the SPDF A via a Reply message.

In Step 5, the SPDF A returns the address A3 to the P-CSCF A via an AA-Answer (AAA) message.

In Step 6, the P-CSCF A substitutes the original address A 1 of the SDP by the address A3 in the AAA message, and forwards the SDP offer message to a called party.

The first embodiment describes an initial creating process of media mapping for the calling party. In the process, the P-CSCF carries a value of the SDP Direction in an AAR message, and the SPDF entity is enabled to determine whether the message is sent to a core side or an access side, so as to request and obtain a local domain address. Afterwards, the SPDF entity notifies the P-CSCF about the local domain address, and the P-CSCF forwards the message according to the local domain address, thereby realizing an NAT control of the calling party.

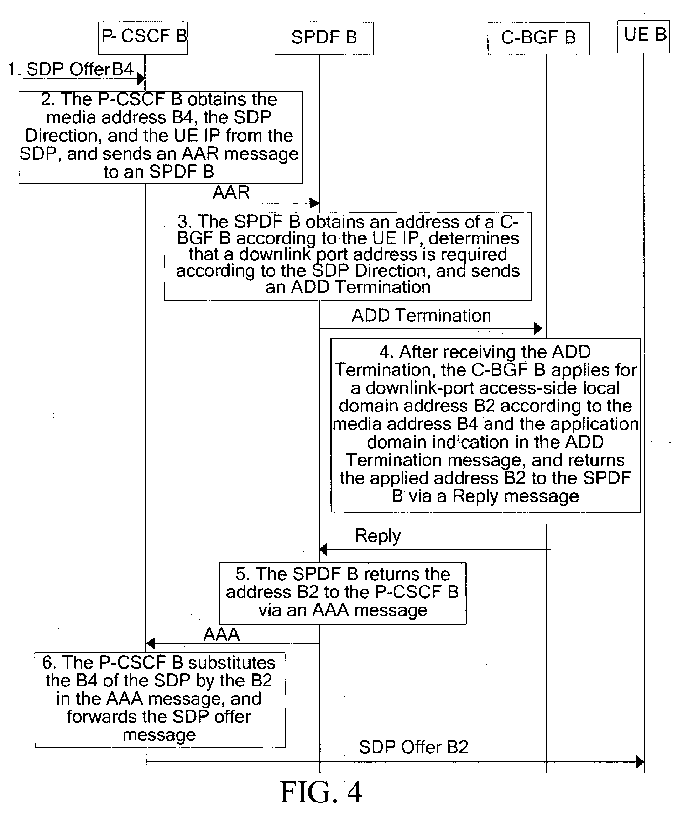

In a second embodiment, the present invention provides a method for realizing an NAT control by using an SDP direction. Referring to FIG. 4, a method of realizing an NAT control by a called party is shown, in which an IBCF networking scenario does not exist, the AF entity is specifically a P-CSCF, and the called party is set to be a user entity B, that is, UE B. The method mainly includes the following steps.

In Step 1, a P-CSCF B receives an SDP offer message carrying a media address B4.

The SDP offer message may be carried in a message such as an INVITE request, and include a group of media streams and codes expected to be used by a message sender, an IP address and a port number through which a message expected to be received by the message sender, and an IP address of an access end. For example, the message may carry the media address B4, an SDP Direction (OUTER _TO_ INNER (1): exiting an IMS core network), and an IP address of the UE B, in which "exiting the IMS core network" indicates a direction from a core side to an access side.

Regarding a message sent from a core-network side to the UE B, the media address serves as a destination address of the message for the core-network side, and serves as a source address of the message for the UE B side.

In Step 2, the P-CSCF B obtains the media address B4, the SDP Direction (OUTER _ _TO_ INNER (1): exiting the IMS core network), and the IP address of the UE B from the received SDP offer message, and then sends an AAR message to an SPDF B.

In Step 3, after receiving the AAR message, the SPDF B searches for a local route according to the IP address of the UE B, obtains an address of a C-BGF B (a core-BGF corresponding to the UE B side), and obtains a value of the SDP Direction carried in the AAR message, in which the value of the SDP Direction is OUTER _TO_ INNER (1), so that the SPDF B determines that it requires to apply for a downlink port address (that is, an access-side address) of a media stream. Therefore, the SPDF B sends an ADD Termination message to the C-BGF B, and applies for an allocation of a downlink port address of a media stream.

The ADD Termination message carries the media address B4 of the SDP offer message and an application domain indication (indicating it applies for an access-side local domain address or a core-side local domain address).

In Step 4, the C-BGF B applies for a downlink-port access-side local domain address B2 according to the media address B4 and the application domain indication in the ADD Termination message, and returns the applied address B2 to the SPDF B via a Reply message.

In Step 5, the SPDF B returns the address B2 to the P-CSCF B via an AAA message.

In Step 6, the P-CSCF B substitutes the original address B4 of the SDP by the address B2 in the AAA message, and forwards the SDP offer message to the access-side UE B.

The second embodiment describes an initial creating process of media mapping for the called party. In the process, the P-CSCF carries the SDP Direction in an AAR message, so that the SPDF entity is enabled to determine whether the message is sent to a core side or an access side, so as to request and obtain a local domain address. Afterwards, the SPDF entity notifies the P-CSCF about the local domain address, and the P-CSCF forwards the message according to the local domain address, thereby realizing an NAT control of the called party.

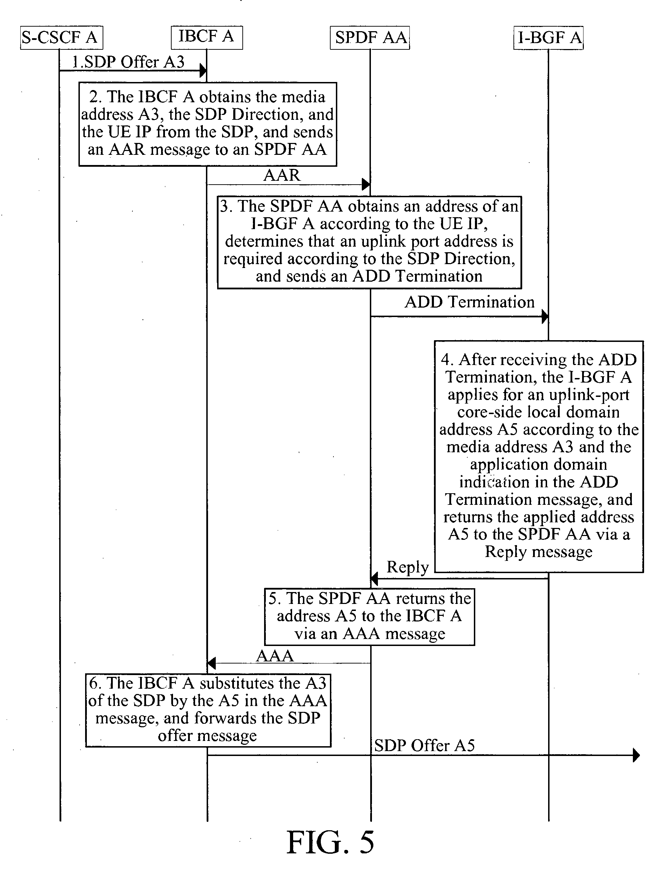

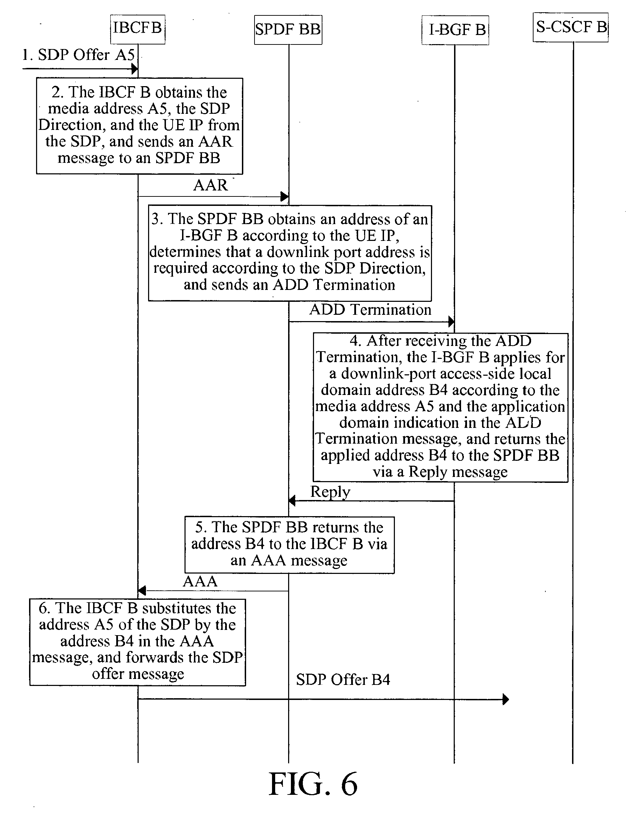

In the above embodiments, two methods of realizing an NAT control are provided in the case of no IBCF networking. When the IBCF networking exists, it is different from the above embodiments in the following aspects. The P-CSCF firstly forwards a corresponding message to a serving-CSCF (S-CSCF), and the S-CSCF forwards the message to the IBCF. Next, the IBCF sends a message carrying an SDP Direction to a local SPDF AA or SPDF BB connected to the IBCF, and then the SPDF AA or SPDF BB interacts with a corresponding interconnect-BGF (I-BGF) to obtain a local address. Then, the SPDF AA or SPDF BB notifies the IBCF about the local address, and then the IBCF forwards the message according to the local address, so as to realize an NAT control. A corresponding process of realizing an NAT control at a calling party in the case of IBCF networking is shown in FIG. 5, and a corresponding process of realizing an NAT control at a called party in the case of IBCF networking is shown in FIG. 6, so that the detailed processes thereof are not given herein again.

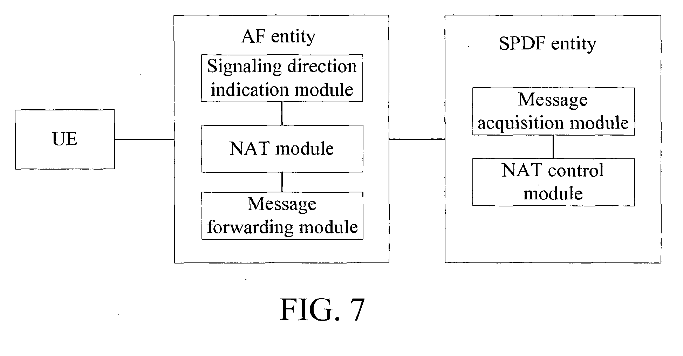

In a third embodiment, the present invention provides a system of realizing an NAT control by using an SDP direction. FIG. 7 is a structural view of the system. Referring to FIG. 7, the system includes a UE, an AF entity, and an SPDF entity.

The AF entity is adapted to receive a message sent from the UE, determine a signaling direction according to the message, and send an AAR message to the SPDF entity where the AAR message carries signaling direction information indicating the signaling direction. The AF entity is also adapted to receive a local domain address corresponding to the message sent from the SPDF entity, and forward the message according to the local domain address.

To achieve the above functions, the AF entity at least includes a signaling direction indication module, an NAT module, and a message forwarding module.

The signaling direction indication module is adapted to receive a message sent from the UE, determine a signaling direction according to the message, carry the signaling direction information in an AAR message, and send the AAR message.

The NAT module is adapted to perform substitutions between an access-side local domain address/local-core-s ide address and a corre-side local domain address/opposite-core-side address (that is, substitutions between an access-side local domain address and a core-side local domain address or between a local-core-side address and an opposite-core-side address) according to a local domain address obtained and sent by the SPDF entity.

The message forwarding module is adapted to forward the message according to the address obtained by the NAT module after performing the address substitution.

The AF entity may be a P-CSCF or an IBCF.

The SPDF entity is adapted to receive the AAR message carrying the signaling direction sent from the AF entity, and realize an NAT control according to the signaling direction. To achieve the above functions, the SPDF entity at least includes a message acquisition module and an NAT control module.

The message acquisition module is adapted to receive the AAR message carrying the signaling direction information sent from the AF entity.

The NAT control module is adapted to realize an NAT control according to the signaling direction information. The NAT control mainly includes determining a required local domain address according to the signaling direction, and sending the address to the AF entity.

In the embodiments of the present invention, a method of determining a signaling direction when the SIP is adopted in the interworking between the IMS network and other networks is mainly introduced, and the method is also applicable to the determination of a signaling direction in the case of interworking between other networks.

In view of the above, according to the embodiments of the present invention, by extending an interface between the AF entity and the SPDF entity and adding an SDP Direction AVP indicating the signaling direction in the AAR message, the SPDF entity is enabled to distinguish an uplink direction or a downlink direction of the SDP, so as to realize an NAT control. Besides, in the case of interworking between an IMS network and certain conventional networks such as a PSTN, or when an upstream or a downstream of a media stream passes through the uplink/downlink port of the BGF at the same time, the SPDF entity is enabled to distinguish the current direction of the SDP is from an access side/local core side to a core side/opposite core side or from the core side/opposite core side to the access side/local core side, so as to realize an NAT control. The direction from the access side/local core side to the core side/opposite core side indicates a direction from the access side to the core side or from the local core side to the opposite core side. The direction from the core side/opposite core side to the access side/local core side indicates a direction from the core side to the access side or from the opposite core side to the local core side.

The above descriptions are merely several embodiments of the present invention, but not intended to limit the present invention.

## Claims

1. A method for realizing network address translation, NAT, in the case of when Session Initiation Protocol, SIP, is adopted in the interworking between an IP multimedia subsystem, IMS, and another network, comprising:
receiving (1), by an application function, AF, entity, a session description protocol, SDP, offer message carrying signaling direction information when one traffic flow contains an uplink media stream and a downlink media stream, wherein uplink indicates a direction from an access side to a core side of the IMS, and downlink indicates a direction from the core side of the IMS to the access side;
determining (2), by the AF entity, a signaling direction according to the signaling direction information;
sending (2), by the AF entity, an access authorization request, AAR, message to a service-based policy decision function, SPDF, entity, wherein the AAR message carries signaling direction information indicating the signaling direction;
receiving (5), by the AF entity, a local domain address corresponding to the signaling direction from the SPDF entity, wherein the local domain address is an uplink port core-side local domain address if the signaling direction is uplink, or the local domain address is a downlink port access-side local domain address if the signaling direction is downlink; and
sending (6), by the AF entity, the SDP offer message according to the local domain address corresponding to the signaling direction; and
the AF entity is a proxy-call session control function, P-CSCF

2. The method according to claim 1, further comprising:
obtaining (3), by the SPDF entity, the signaling direction information from the AAR message sent by the AF entity, obtaining (4) the corresponding local domain address according to the signaling direction information, and sending (5) the obtained local domain address to the AF entity.

3. The method according to claim 2, wherein the SDP offer message received by the AF entity further comprises:
a media address, the signaling direction information indicating the signaling direction and an IP address of an access end.

4. The method according to claim 3, wherein the obtaining, by the SPDF entity, the corresponding local domain address according to the signaling direction further comprises:
determining, by the SPDF entity, a corresponding border gateway function, BGF, entity according to the IP address of the access end, and determining the required local domain address according to the signaling direction; and
requesting and obtaining, by the SPDF entity, the local domain address from the corresponding BGF entity.

5. The method according to claim 4, wherein the requesting and obtaining, by the SPDF entity, the local domain address from the corresponding BGF entity further comprises:
sending, by the SPDF entity, a local domain address request message carrying the media address and an application domain indication to the BGF entity; and
applying, by the BGF entity, for the corresponding local domain address according to the request message, and returning the applied address to the SPDF entity.

6. The method according to claim 3 or 4, wherein the sending, by the AF entity, the SDP offer message according to the local domain address further comprises:
substituting, by the AF entity, the media address originally carried in the SDP offer message by the local domain address, and then sending the SDP offer message.

## Patentansprüche

1. Verfahren zur Realisierung von Netzwerkadressenübersetzung, NAT, im Fall, dass das "Session Initiation Protocol", SIP, bei der Zusammenarbeit zwischen einem IP-Multimediasubsystem, IMS, und einem anderen Netzwerk verwendet wird, umfassend:
Empfangen (1) einer "Session Description Protocol"-Angebotsnachricht, SDP-Angebotsnachricht, die Signalisierungsrichtungsinformationen führt, durch eine Anwendungsfunktions-Entität, AF-Entität, wenn ein Verkehrsfluss einen Aufwärtsstrecken-Medienstrom und einen Abwärtsstrecken-Medienstrom enthält,
wobei Aufwärtsstrecke eine Richtung von einer Zugangsseite zu einer Kernseite des IMS angibt und Abwärtsstrecke eine Richtung von der Kernseite des IMS zu der Zugangsseite angibt;
Bestimmen (2) einer Signalisierungsrichtung durch die AF-Entität gemäß den Signalisierungsrichtungsinformationen;
Senden (2) einer Zugangsautorisierungsanforderungs-Nachricht, AAR-Nachricht,
durch die AF-Entität zu einer Entität der auf dem Dienst basierenden Richtlinienentscheidungsfunktion, SPDF (service-based policy decision function),
wobei die AAR-Nachricht Signalisierungsrichtungsinformationen führt, die die Signalisierungsrichtung angeben;
Empfangen (5) einer der Signalisierungsrichtung entsprechenden Lokal-Domänenadresse durch die AF-Entität von der SPDF-Entität, wobei die Lokal-Domänenadresse eine aufwärtsstreckenport-kernseitige Lokal-Domänenadresse ist,
wenn die Signalisierungsrichtung Aufwärtsstrecke ist, oder die Lokal-Domänenadresse eine abwärtsstreckenport-zugangsseitige Lokal-Domänenadresse ist, wenn die Signalisierungsrichtung Abwärtsstrecke ist; und
Senden (6) der SDP-Angebotsnachricht durch die AF-Entität gemäß der der Signalisierungsrichtung entsprechenden Lokal-Domänenadresse; und
die AF-Entität ist eine "Proxi-Call Session Control Function", P-CSCF.

2. Verfahren nach Anspruch 1, ferner umfassend:
Erhalten (3) der Signalisierungsrichtungsinformationen durch die SPDF-Entität aus der durch die AF-Entität gesendeten AAR-Nachricht, Erhalten (4) der entsprechenden Lokal-Domänenadresse gemäß den Signalisierungsrichtungsinformationen und Senden (5) der erhaltenen Lokal-Domänenadresse zu der AF-Entität.

3. Verfahren nach Anspruch 2, wobei die durch die AF-Entität empfangene SDP-Angebotsnachricht ferner Folgendes umfasst:
eine Medienadresse, die die Signalisierungsrichtung angebenden Signalisierungsrichtungsinformationen und eine IP-Adresse eines Zugangsendes.

4. Verfahren nach Anspruch 3, wobei das Erhalten der entsprechenden Lokal-Domänenadresse durch die SPDF-Entität gemäß der Signalisierungsrichtung ferner Folgendes umfasst:
Bestimmen einer entsprechenden "Border Gateway Function"-Entität, BGF-Entität,
durch die SPDF-Entität gemäß der IP-Adresse des Zugangsendes und Bestimmen der erforderlichen Lokal-Domänenadresse gemäß der Signalisierungsrichtung; und
Anfordern und Erhalten der Lokal-Domänenadresse durch die SPDF-Entität von der entsprechenden BGF-Entität.

5. Verfahren nach Anspruch 4, wobei das Anfordern und Erhalten der Lokal-Domänenadresse durch die SPDF-Entität von der entsprechenden BGF-Entität ferner Folgendes umfasst:
Senden einer Lokal-Domänenadressen-Anforderungsnachricht, die die Medienadresse und eine Anwendungsdomänenangabe führt, durch die SPDF-Entität zu der BGF-Entität; und
Beantragen der entsprechenden Lokal-Domänenadresse durch die BGF-Entität gemäß der Anforderungsnachricht und Zurückgeben der beantragten Adresse an die SPDF-Entität.

6. Verfahren nach Anspruch 3 oder 4, wobei das Senden der SDP-Angebotsnachricht durch die AF-Entität gemäß der Lokal-Domänenadresse ferner Folgendes umfasst:
Substituieren durch die AF-Entität der ursprünglich in der SDP-Angebotsnachricht geführten Medienadresse durch die Lokal-Domänenadresse und dann Senden der SDP-Angebotsnachricht.

## Revendications

1. Procédé de mise en oeuvre d'une conversion d'adresse réseau, NAT (Network Address Translation), dans le cas où un protocole d'ouverture de session, SIP (Session Initiation Protocol), est adopté dans l'interfonctionnement entre un sous-système multimédia IP, IMS (IP Multimedia Subsystem), et un autre réseau, comprenant :
la réception (1), par une entité à fonction d'application, AF (Application Function),
d'un message d'offre de protocole de description de session, SDP (Session Description Protocol), acheminant des informations de direction de signalisation lorsqu'un flux de trafic contient un flux multimédia de liaison montante et un flux multimédia de liaison descendante, dans lequel la liaison montante indique une direction allant d'un côté accès à un côté coeur de l'IMS, et la liaison descendante indique une direction allant du côté coeur de l'IMS au côté accès ;
la détermination (2), par l'entité AF, d'une direction de signalisation conformément aux informations de direction de signalisation ;
l'envoi (2), par l'entité AF, d'un message de demande d'autorisation d'accès, AAR (Access Authorization Request), à une entité à fonction de décision de politique à base de service, SPDF (Service-based Policy Decision Function), dans lequel le message AAR achemine des informations de direction de signalisation indiquant la direction de signalisation ;
la réception (5), par l'entité AF, d'une adresse de domaine local correspondant à la direction de signalisation en provenance de l'entité SPDF, dans lequel l'adresse de domaine local est une adresse de domaine local du côté coeur de port de liaison montante si la direction de signalisation est la liaison montante, ou bien l'adresse de domaine local est une adresse de domaine local du côté accès au port de liaison descendante si la direction de signalisation est la liaison descendante ; et
l'envoi (6), par l'entité AF, du message d'offre SDP conformément à l'adresse de domaine local correspondant à la direction de signalisation ; et
l'entité AF est une fonction de contrôle de session d'appel de mandataire, P-CSCF (Proxy-Call Session Control Function).

2. Procédé selon la revendication 1, comprenant en outre :
l'obtention (3), par l'entité SPDF, des informations de direction de signalisation à partir du message AAR envoyé par l'entité AF, l'obtention (4) de l'adresse de domaine local correspondante conformément aux informations de direction de signalisation, et l'envoi (5) de l'adresse de domaine local obtenue à l'entité AF.

3. Procédé selon la revendication 2, dans lequel le message d'offre SDP reçu par l'entité AF comprend en outre :
une adresse multimédia, les informations de direction de signalisation indiquant la direction de signalisation et une adresse IP d'une extrémité d'accès.

4. Procédé selon la revendication 3, dans lequel l'obtention, par l'entité SPDF, de l'adresse de domaine local correspondante conformément à la direction de signalisation comprend en outre :
la détermination, par l'entité SPDF, d'une entité à fonction de passerelle frontière,
BGF (Border Gateway Function), correspondante conformément à l'adresse IP de l'extrémité d'accès, et la détermination de l'adresse de domaine local requise conformément à la direction de signalisation ; et
la demande et l'obtention, par l'entité SPDF, de l'adresse de domaine local en provenance de l'entité BGF correspondante.

5. Procédé selon la revendication 4, dans lequel la demande et l'obtention, par l'entité SPDF, de l'adresse de domaine local en provenance de l'entité BGF correspondante comprend en outre :
l'envoi, par l'entité SPDF, d'un message de demande d'adresse de domaine local acheminant l'adresse multimédia et une indication de domaine d'application à l'entité BGF ; et
la demande, par l'entité BGF, de l'adresse de domaine local correspondante conformément au message de demande, et le renvoi de l'adresse demandée à l'entité SPDF.

6. Procédé selon la revendication 3 ou 4, dans lequel l'envoi, par l'entité AF, du message d'offre SDP conformément à l'adresse de domaine local comprend en outre :
la substitution, par l'entité AF, de l'adresse multimédia initialement acheminée dans le message d'offre SDP par l'adresse de domaine local, puis l'envoi du message d'offre SDP.
